# DEMANDE DE BREVET EUROPEEN

(11) **EP 1 100 036 A1**
(43) Date de publication de la demande: **16.05.2001**
(21) Numéro de dépôt: 99402553.4
(22) Date de dépôt: 15.10.1999
(51) Int. Cl.: G06F 17/60

(54) **Système d'aide à la sélection de produits et services financiers proposés par un organisme financier**

(71) Demandeur: Banque Cortal, 75116 Paris (FR)
(72) Inventeur: Thibaut, Cécile, 94130 Nogent sur Marne (FR); Trecco, René, 92190 Meudon (FR)
(74) Mandataire: Habasque, Etienne Joel Jean-François

(57) **Abrégé**

Ce système d'aide à la sélection de produits et services financiers proposés par un organisme financier comporte, interposés entre des moyens formant terminal d'accès (2) et des moyens de stockage (1) d'une base de données générique, des moyens (10) de filtrage des accès de l'individu aux produits et services financiers proposés dans la base de données générique, qui sont associés à des moyens de stockage (12), pour différentes résidences fiscales possibles présentées à l'individu, de tables de validation/inhibition des accès de cet individu à différents produits et services proposés.

## Description

La présente invention concerne un système d'aide à la sélection de produits et services financiers proposés par un organisme financier.

Les organismes financiers sans guichet, c'est-à-dire accessibles par exemple à partir d'un terminal d'ordinateur et d'un réseau de communication, rencontrent de plus en plus de succès auprès du public pour diverses raisons.

De façon générale, ces organismes mettent à la disposition du public des systèmes d'aide à la sélection de produits et services, qui comprennent des moyens de stockage d'une base de données générique dans laquelle sont regroupées des informations relatives à différents produits et services proposés par l'organisme, tandis que le public peut avoir accès à ces moyens de stockage par l'intermédiaire de moyens formant terminal d'accès à ces produits et services comprenant des moyens d'affichage d'informations et des moyens d'entrée d'informations par un individu, raccordés à ces moyens de stockage de la base de données générique par un réseau de communication, et permettant alors à l'individu d'accéder aux produits et services proposés.

Les progrès en matière de réseaux de transmission d'informations se sont traduits par une internationalisation des échanges, ce qui permet par exemple à des individus résidant dans un pays déterminé d'accéder à des produits et services financiers proposés par un organisme implanté dans un pays différent.

Ceci pose alors des problèmes réglementaires liés à l'habilitation d'un organisme financier à proposer à un individu résidant dans tel ou tel pays, des produits et services de natures différentes.

Ceci peut par exemple se traduire par le fait qu'un organisme peut être habilité à proposer aux résidents d'un pays, un certain nombre de produits et services, qu'il n'est pas habilité à proposer à des individus résidant dans un autre pays, en raison de contraintes réglementaires locales.

Pour résoudre ces problèmes, dans l'état de la technique, les organismes financiers de ce type recommandent aux individus accédant à leurs produits et services, de vérifier qu'ils sont ou non autorisés à opérer des transactions sur ceux-ci.

On conçoit que ceci présente un certain nombre d'inconvénients, tant pour les organismes financiers que pour les individus accédant aux produits et services de ceux-ci, en raison des risques de mauvaises interprétations et utilisations de ceux-ci.

Le but de l'invention est donc de résoudre ces problèmes.

A cet effet, l'invention a pour objet un système d'aide à la sélection de produits et services financiers proposés par un organisme financier, comprenant :
- des moyens de stockage d'une base de données générique dans laquelle sont regroupées des informations relatives à différents produits et services proposés par l'organisme, et
- des moyens formant terminal d'accès à ces produits et services, comprenant des moyens d'affichage d'informations et des moyens d'entrée d'informations par l'individu, raccordés aux moyens de stockage de la base de données générique et permettant à l'individu d'accéder aux produits et services proposés,
caractérisé en ce qu'il comporte, interposés entre les moyens formant terminal d'accès et les moyens de stockage de la base de données, des moyens de filtrage des accès de l'individu aux produits et services proposés dans la base de données générique, comportant :
- des moyens de pilotage des moyens d'affichage des moyens formant terminal, pour présenter à l'individu un choix de résidences fiscales possibles,
- des moyens de stockage, pour chaque résidence fiscale possible présentée à l'individu, d'une table de validation /inhibition d'accès aux différents produits et services proposés,
- des moyens d'acquisition d'informations relatives à une résidence fiscale sélectionnée par l'individu grâce aux moyens d'entrée d'informations des moyens formant terminal, parmi les résidences fiscales possibles présentées à celui-ci sur les moyens d'affichage, et
- des moyens de contrôle des accès de l'individu à travers les moyens formant terminal, aux produits et services de la base de données générique dans les moyens de stockage, en fonction des informations de validation/inhibition des accès à ces produits et services, établies dans la table de validation/inhibition d'accès et correspondant à la résidence fiscale sélectionnée par l'individu.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide suivant l'invention ; et
- la Fig.2 représente un organigramme illustrant le fonctionnement de celui-ci.

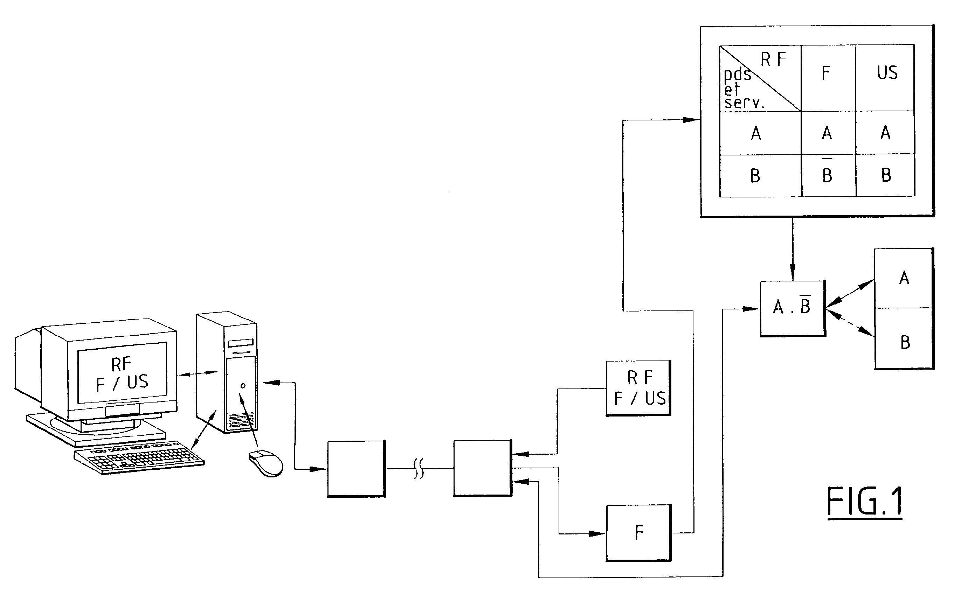

On a en effet représenté sur cette figure 1, un système d'aide à la sélection de produits et services financiers proposés par un organisme financier.

Ces produits et services comprennent par exemple deux produits et services désignés par A et B sur cette figure. Des informations relatives à ces produits et services proposés par l'organisme sont stockées dans des moyens de stockage d'une base de données générique dans laquelle sont regroupées ces informations, ces moyens de stockage étant désignés par la référence générale 1 sur cette figure.

Par ailleurs, dans le système selon l'invention, il est prévu des moyens formant terminal d'ordinateur d'accès à ces produits et services, ces moyens formant terminal d'ordinateur étant désignés par la référence générale 2 et comprenant des moyens d'affichage d'informations désignés par la référence générale 3, et des moyens d'entrée d'informations par un individu, comprenant par exemple un clavier 4 et une souris 5, ces moyens formant terminal étant raccordés aux moyens de stockage 1 de la base de données générique par un réseau de communication et permettant à l'individu d'accéder aux produits et services proposés.

Ainsi par exemple, le terminal d'ordinateur 2 est raccordé aux moyens de stockage 1 par un réseau de transmission d'informations désigné par la référence générale 6 à travers par exemple des moyens de modulation/démodulation 7 et 8 et une ligne téléphonique 9.

Selon l'invention, ce système comporte, interposé entre les moyens formant terminal d'accès 2 et les moyens 1 de stockage de la base de données générique, des moyens 10 de filtrage des accès de l'individu aux produits et services proposés dans la base de données générique.

Ces moyens de filtrage comprennent :
- des moyens 11 de pilotage des moyens d'affichage 3 des moyens formant terminal 2, pour présenter à l'individu un choix de résidences fiscales possibles sous la forme par exemple d'une page-écran à champs sélectionnables,
- des moyens de stockage 12, pour chaque résidence fiscale possible présentée à l'individu, d'une table de validation/inhibition d'accès aux différents produits et services proposés,
- des moyens 13 d'acquisition d'informations relatives à une résidence fiscale sélectionnée par l'individu grâce aux moyens d'entrée d'informations 4, 5 des moyens formant terminal 2, parmi les résidences fiscales possibles présentées à celui-ci sur les moyens d'affichage, et
- des moyens 14 de contrôle des accès de l'individu à travers les moyens formant terminal, aux produits et services de la base de données générique dans les moyens de stockage 1, en fonction des informations de validation/inhibition des accès à ces produits et services, établies dans la table de validation/inhibition d'accès et correspondant à la résidence fiscale sélectionnée par l'individu.

Dans l'exemple de réalisation qui a été décrit en regard de ces figures, deux résidences fiscales à savoir la France et les Etats-Unis, peuvent être sélectionnées par l'individu.

Bien entendu, un nombre différent de résidences fiscales peut être envisagé et différentes présentations du choix de résidences fiscales possibles peuvent être utilisées pour afficher celles-ci afin de faciliter ce choix par l'individu.

Comme cela est illustré sur la figure 1, on conçoit alors que dans les moyens de stockage 12, on stocke des informations relatives à la validation ou l'inhibition de l'accès à tel ou tel produit ou service en fonction de telle ou telle résidence fiscale.

C'est ainsi par exemple que dans le cas illustré, si la résidence fiscale sélectionnée est la France, l'accès au produit A est validé, tandis que l'accès au produit B est inhibé.

Par contre, si la résidence fiscale sélectionnée est les Etats-Unis, les accès aux produits A et B sont validés.

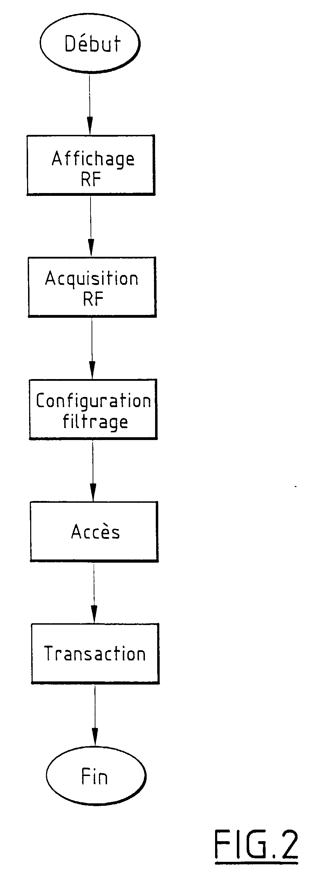

On conçoit alors que lors d'une première étape de fonctionnement de ce système, telle qu'illustré sur la figure 2, cette première étape étant désignée par la référence générale 15, les moyens de pilotage 11 assurent la commande de l'afficheur 3 du terminal d'ordinateur pour présenter à l'individu un choix de résidences fiscales possibles, à savoir dans l'exemple France ou Etats-Unis.

Lors de l'étape 16, les moyens 13 font l'acquisition d'informations relatives à une résidence fiscale sélectionnée par l'individu, grâce aux moyens d'entrée d'informations des moyens formant terminal parmi les différentes résidences fiscales présentées.

La sélection de la résidence peut par exemple se faire par manipulation de la souris 5 et sélection d'un champ, afin de sélectionner l'une des résidences fiscales, telle que par exemple la France dans l'exemple illustré.

Cette information de sélection de résidence fiscale est alors transmise aux moyens 12 de stockage des tables de validation/inhibition d'accès et aux moyens de contrôle des accès 14 pour assurer en 17 (Fig. 2), la configuration de ceux-ci afin de filtrer et de contrôler les accès de l'individu aux produits et services de la base de données générique dans les moyens de stockage 1, en fonction de ces informations de validation/inhibition correspondant à la résidence fiscale sélectionnée.

Ainsi par exemple, dans le cas illustré de la sélection de la France comme résidence fiscale, les moyens de contrôle 14 assurent une validation de l'accès au produit A et une inhibition de l'accès au produit B.

L'individu qui accède à la base de données générique à travers les moyens formant terminal d'accès 2 ne peut alors avoir accès qu'à ce produit A dans le cas où sa résidence fiscale est la France.

Dans le cas où la résidence fiscale sélectionnée est les Etats-Unis, l'individu peut avoir accès aux deux produits A et B comme cela est établi dans la table de validation/inhibition correspondante stockée dans les moyens de stockage 12.

Cet accès est désigné par la référence générale 18 sur la figure 2 et permet alors à l'individu d'opérer ou non une transaction sur le produit ou service correspondant en fonction de ses souhaits, telle que cela est illustré par l'étape 19.

On conçoit alors que cette structure permet de résoudre les problèmes mentionnés dans l'état de la technique à propos d'accès réglementés ou non à tel ou tel produit ou service en fonction de la résidence fiscale de l'individu accédant à la base de données générique.

Ceci permet alors à l'organisme de disposer d'une base de données générique dans laquelle sont stockés tous les produits et services proposés par celui-ci indépendamment des accès réglementés ou non de ceux-ci pour tel ou tel individu.

La gestion de cette base de données est alors simplifiée pour l'organisme.

Par ailleurs, les accès des individus à cette base de données sont filtrés en fonction de tables de validation/inhibition d'accès établies pour différentes résidences fiscales possibles en fonction des réglementations et des habilitations à proposer et utiliser tels ou tels produits et services en fonction de cette résidence fiscale.

Le développement et la mise à jour de ces tables sont également extrêmement simplifiés dans la mesure où toutes les informations relatives à celles-ci sont facilement accessibles dans les tables.

Bien entendu, d'autres modes de réalisation encore de ce système peuvent être envisagés.

## Revendications

1. Système d'aide à la sélection de produits et services financiers proposés par un organisme financier, comprenant :
- des moyens de stockage (1) d'une base de données générique dans laquelle sont regroupées des informations relatives à différents produits et services (A, B) proposés par l'organisme, et
- des moyens (2) formant terminal d'accès à ces produits et services, comprenant des moyens (3) d'affichage d'informations et des moyens (4, 5) d'entrée d'informations par l'individu, raccordés aux moyens de stockage (1) de la base de données générique et permettant à l'individu d'accéder aux produits et services proposés,
caractérisé en ce qu'il comporte, interposés entre les moyens formant terminal d'accès (2) et les moyens de stockage (1) de la base de données, des moyens de filtrage (10) des accès de l'individu aux produits et services proposés dans la base de données générique, comportant :
- des moyens (11) de pilotage des moyens d'affichage (3) des moyens formant terminal (2), pour présenter à l'individu un choix de résidences fiscales possibles,
- des moyens de stockage (12), pour chaque résidence fiscale possible présentée à l'individu, d'une table de validation /inhibition d'accès aux différents produits et services proposés,
- des moyens (13) d'acquisition d'informations relatives à une résidence fiscale sélectionnée par l'individu grâce aux moyens d'entrée d'informations (4, 5) des moyens formant terminal (2), parmi les résidences fiscales possibles présentées à celui-ci sur les moyens d'affichage (3), et
- des moyens de contrôle (14) des accès de l'individu à travers les moyens formant terminal (2), aux produits et services (A, B) de la base de données générique dans les moyens de stockage (1), en fonction des informations de validation/inhibition des accès à ces produits et services, établies dans la table (12) de validation/inhibition d'accès et correspondant à la résidence fiscale sélectionnée par l'individu.

2. Système selon la revendication 1, caractérisé en ce que les moyens d'accès comprennent un terminal d'ordinateur (2) raccordé par un réseau de transmission d'informations (6) aux moyens de stockage de la base de données (1).
